Europäisches Patentamt

European Patent Office

Office européen des brevets

(19)

(11) Veröffentlichungsnummer: **0 084 354**
**A2**

(12) **EUROPÄISCHE PATENTANMELDUNG**

(21) Anmeldenummer: **83100286.0**

(22) Anmeldetag: **14.01.83**

(51) Int. Cl.³: **B 60 C 27/06**

(30) Priorität: **20.01.82 CH 346/82**

(43) Veröffentlichungstag der Anmeldung:
**27.07.83 Patentblatt 83/30**

(84) Benannte Vertragsstaaten:
**AT BE DE FR IT**

(71) Anmelder: **Milz, Arthur
Bodenmühle
CH-8636 Wald(CH)**

(72) Erfinder: **Milz, Arthur
Bodenmühle
CH-8636 Wald(CH)**

(74) Vertreter: **Blum, Rudolf Emil et al,
c/o E. Blum & Co Patentanwälte Vorderberg 11
CH-8044 Zürich(CH)**

(54) **Gleitschutzkette mit verzweigtem Laufteil.**

(57) Der Laufteil der Gleitschutzkette weist Verzweigungsstellen auf, in welchen mehrere Kettenabschnitte (3, 4a, 4b) in einem, aus einem herzförmig zugebogenen, Stahldraht (1) bestehenden Verbindungsstück gefangen sind. Ausserdem ist ein, den gebogenen Draht zu einer geschlossenen Form ergänzendes und durch diesen in nicht-drehbarer Weise gefangengehaltenes, Verschleissstück (2) vorgesehen.

Fig.1

EP 0 084 354 A2

- 1 -

## Gleitschutzkette mit verzweigtem Laufteil

Die Erfindung bezieht sich auf eine Reifenschutzkette mit einem Verzweigungen aufweisenden Laufteil. Diese Verzweigungen bilden Knoten des Kettennetzes, in welchen mehrere, im allgemeinen drei, Kettenabschnitte zusammentreffen. Es ist somit notwendig, an diesen Stellen ein Verzweigungsglied vorzusehen, welches beispielsweise drei Kettenabschnitte zusammenhält. In seiner üblichsten Ausführung besteht dieses Verzweigungsglied aus einem zugeschweissten Ring, was aber eine ganze Reihe von Nachteilen bedingt. In erster Linie muss dieser Ring nach seiner Verbindung mit den im Knotenpunkt zusammenkommenden Kettenabschnitten zugeschweisst und danach gehärtet werden, da er mindestens demselben Abriebvorgang ausgesetzt ist, wie die übrigen Kettenglieder. Praktisch ist der Verschleiss von an mehreren Punkten gehaltenen Verzweigungsringen in der Regel sogar grösser als derjenige gewöhnlicher Kettenglieder, da beim Bremsen und Beschleunigen die Haltepunkte dazu neigen, paarweise zusammen zu rutschen, worauf der Ring etwa eine Viertelsdrehung machen kann, dann aber durch Verschränkung der Ketten in einer zur Lauffläche des Reifens mehr oder weniger senkrechten Lage blockiert wird, im Gegensatz zu einzelnen Kettengliedern, welche eine grössere Drehfreiheit haben. Fabrikationstechnisch ist das Zuschweissen eines in drei Kettenstücke eingefädelten Ringes an sich schon umständlich, die nachträgliche Härtung aber noch problematischer, da das gesamte Y-förmige Gebilde, bestehend aus dem Ring und den drei daranhängenden, ungehärteten Kettenabschnitten zusammen behandelt werden muss. Industriell ist dies nur bei gleichzeitiger Härtung vieler solcher Gebilde, beispielsweise in einer Trommel, wirtschaftlich. Das regellose Aufeinanderliegen der Gebilde verhindert aber die wünschenswerte, gleichmässige Härtung auf eine vorgeschriebene Tiefe, wie sie für die Kettenabschnitte allein ohne weiteres, durch kontinuierliche Durchlauf-Härtung einer endlosen Kette und nachträgliches Auftrennen derselben in Kettenabschnitte, auf sehr wirtschaftliche Weise erreichbar ist. Man hat daher schon verschiedentlich nach Verzweigungsgliedern gesucht, die das Zusammenfügen von mehreren Kettenabschnitten ohne nachträgliches Schliessen durch Schweissen gestatten. Dabei haben sich schäkelartige, durch Schrauben und dergleichen schliessbare Verbindungs- und Verzweigungsglieder, wie etwa in den CH-PS 546 156 und 508 496 beschrieben, nur bei den grossen Dimensionen der als eigentliche Kettennetze ausgebildeten Gleitschutzvorrichtungen für Baumaschinen und dergleichen, als brauchbar erwiesen. Solche Glieder sind jedoch wegen ihrer Sperrigkeit, sowie aus Kosten- und Gewichtsgründen für die sogenannten Schneeketten leichterer Fahrzeuge ungeeignet. Dasselbe gilt für massive, entweder nach der Art von Brummel-Haken formschlüssig mit anderen Gliedern des Netzes verbundenen, oder zu diesem Zweck mit Schlüssellochartigen Durchbrüchen versehene Verbindungsglieder, von denen die CH-PS 551 239 einige Varianten zeigt. Andererseits bleibt die Verwendung von durch Nieten, Stiftverbindungen usw. geschlossenen Verbindungsglieder, wie etwa in der CH-PS 589 523 vorgeschlagen, aus Preisgründen sowie wegen ihrer grösseren Anfälligkeit gegen Abnützung, auf Reparaturzwecke beschränkt. Der an sich naheliegende Gebrauch eines einfachen, aus Stahl gefertigten und zu einem offenen Ring vorgebogenen Verzweigungsgliedes, welches nach Einfädeln in die Endglieder mehrerer Kettenabschnitte zugebogen, nicht aber zugeschweisst wird, hat sich nicht bewährt, zur Hauptsache weil er durch die zeitweise grossen auftretenden Kräfte aufgebogen wird. Es stellt sich also die Aufgabe, eine Gleitschutzkette zu schaffen, deren Verzweigungsglieder bei der Kettenherstellung in die Endglieder von schon gehärteten Kettenabschnitten eingeführt und ohne Schweissen, Schrauben oder Nieten sowie ohne einer nachträglichen Wärmebehandlung zu bedürfen, endgültig mit diesen verbunden werden können.

Erfindungsgemäss wird dies durch die in Anspruch 1 definierte Anordnung erreicht. Dabei wird das Verbindungsstück vorzugsweise aus Stahldraht und das Abnützungsstück aus demselben oberflächengehärteten Material mit zähem Kern, wie die Glieder der Kettenabschnitte, gefertigt. Auch ist es vorteilhaft die beiden, sich je im wesentlichen in einer Ebene ausdehnenden Stücke so ineinander zu verschränken, dass ihre Hauptebenen etwa senkrecht zueinander ausgerichtet sind. Das Zusammenfügen mehrerer Kettenabschnitte an einer Verzweigungsstelle erfolgt vorzugsweise, indem ein aus Draht gebildetes, vorgeformtes Verbindungstück durch die Endglieder der Kettenabschnitte und durch ein durchbrochenes Abnützungsstück gefädelt und danach zugebogen wird.

Es bietet die Erfindung eine Reihe von Vorteilen. So können insbesondere aus einer gleichmässig gehärteten Endloskette herausgetrennte Kettenabschnitte ohne spezielle Schweissapparatur durch einfache Verformungsarbeit zusammengesetzt werden, ohne dass eine nachträgliche Wärmebehandlung nötig wäre. Das für das Verbindungsstück verwendete Material kann aus einem bezüglich seiner Verformungseigenschaften optimal gewählten Material bestehen, welches weder schweissbar, noch gegen durch die Fahrbahn bewirkten Abrieb widerstandsfähig sein muss. Denn da das Verbindungsstück je einmal durch mindestens drei Kettenendglieder, und zweimal durch das Abnützungsstück hindurchtritt, wird es an mindestens fünf Stellen im Abstand von der Fahrbahn gehalten, die es somit praktisch nicht berühren kann. Die Existenz von drei getrennten Oeffnungen, in welchen Kettenendglieder gefangen sind, verhindert das sonst häufig auftretende Zusammenrutschen mehrerer Endglieder, nach welchem das Verzweigungsglied praktisch nur noch an zwei diametral entgegengesetzten Stellen gehalten wird, und sich um die diese Stellen verbindende Diagonale drehen kann. Da die Drehung, infolge Verschränkung der Ketten, vor einer halben Umdrehung aufhört, entsteht der berüchtigte, bevorzugte Abrieb der in einer aufgestellten Lage festgehaltenen bekannten Verzweigungsgliedern. Bei der Erfindung werden die gefangenen Kettenendglieder in genügendem Abstand voneinander gehalten, um das Kippen um eine bevorzugte Diagonale zu verhindern. Da sich zudem das vom Verbindungsstück zweimal durchdrungene Verschleissstück nicht drehen, und demnach nicht auf der Fahrbahn abrollen kann, wird ein weiterer gravierender Nachteil bekannter, mit Verschleissringen versehener Verzweigungsglieder vermieden. Weitere vorteilhafte Eigenschaften ergeben sich aus der folgenden Beschreibung bevorzugter Ausführungsbeispiele anhand der Zeichnungen. Es zeigen:

Fig. 1 eine dreiteilige Verzweigungsstelle im Laufteil einer erfindungsgemässen Ketten,

Fig. 2 einen Schnitt längs der Linie II-II der Fig.1,

Fig. 3 die Lage der Verzweigungsstellen bei einer auf einem Reifen aufgezogenen Kette, und

Fig. 4 und 5 Schemas einer vierteiligen bzw. dreiteiligen Verzweigungsstelle.

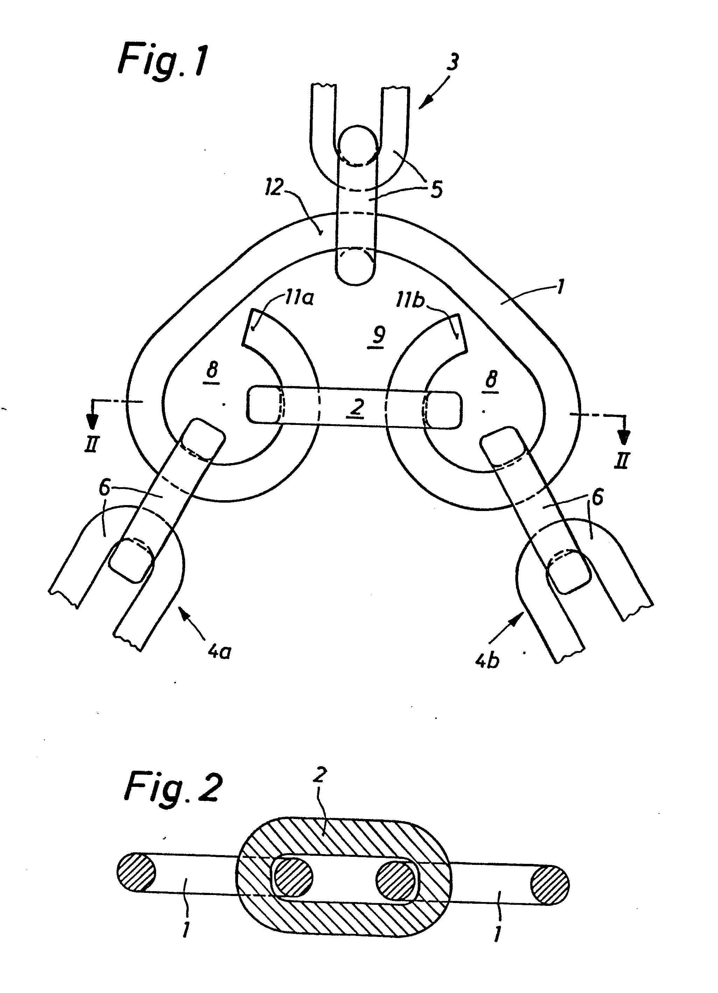

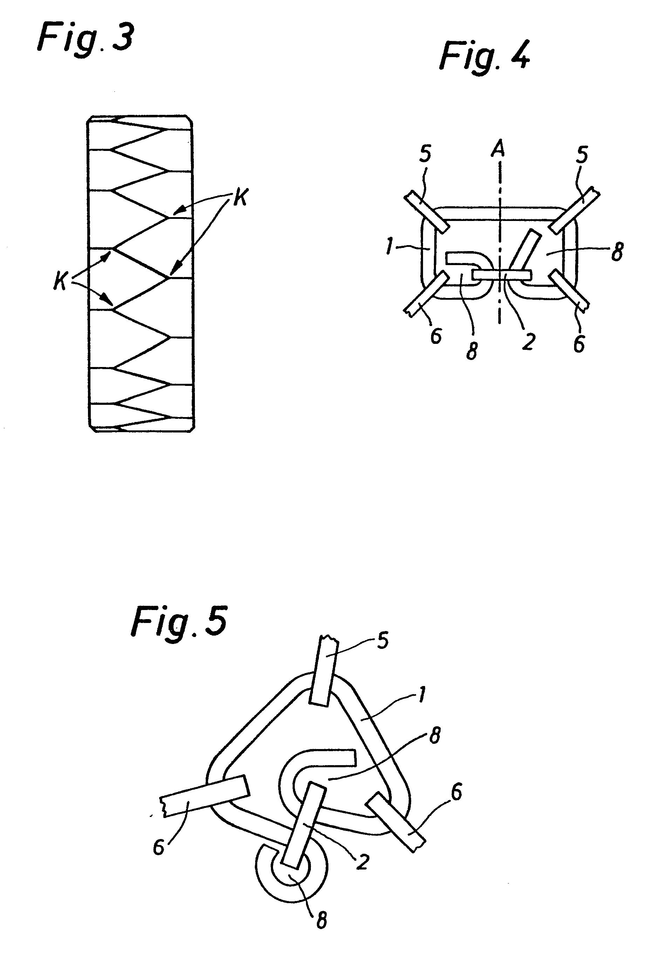

Fig. Fig. 1 zeigt eine Verzweigung im Laufteil einer erfindungsgemässen Gleitschutzkette. Es bezeichnen 1,2 ein Verzweigungsglied, bestehend aus einem aus Rundstahl gebogenen Verbindungsstück 1 und einem Verschleissstück 2. Als Material wird für ersteres vorzugsweise Klaviersaitenstahl von etwa 160 kg verwendet und für letzteres eine für Laufketten übliche Legierung. Das Verzweigungsglied verbindet drei in einem Knotenpunkt Y-förmig zusammenkommende Kettenabschnitte 3, 4a, 4b, die einen Teil des Laufnetzes der Gleitschutzkette bilden. In Fig. 3, welche schematisch eine Aufsicht auf die Lauffläche eines mit einer Gleitschutzkette bestückten Reifens zeigt, sind einige mögliche Lagen solcher Knotenpunkte mit K bezeichnet. Die Kettenabschnitte 3 und 4a, 4b bestehen aus Kettengliedern 5, respektive 6, welche gleich- oder verschiedenartig sein können. Im vorliegenden Beispiel weisen die Abschnitte 4a und 4b gleiche, der Abschnitt 3 davon unterschiedliche Kettenglieder auf. Alle weisen in der für den Laufteil einer Gleitschutzkette üblichen Weise einen zähen Kern, umgeben von einer durch Oberflächenhärtung erzeugen harten Oberfläche auf. Die Enden des herzförmig gebogenen Verbindungsstückes 1 sind so eingerollt, dass sie zwei Augen 8 bilden, in denen je ein Endglied 6 eines der in der Figur untenliegenden Kettenabschnitte 4a,4b gefangen ist. Die Hauptebenen dieser Endglieder, wie auch diejenigen des Endgliedes des in der Figur oben befindlichen Abschnittes 3 liegen somit senkrecht zur Zeichnungsebene, während die Hauptebene des Verbindungsstückes 1 parallel zur Zeichnungsebene liegt. Ein einzelnes Kettenglied 2 mit ebenfalls zur Zeichenebene senkrechten Hauptebene, ist gleichzeitig in beiden Augen 8 gefangen und schützt durch seine Lage und Stellung das stählerne Verbindungsstück 1 vor Berührung mit der Fahrbahn, wie insbesondere aus Fig. 2 ersichtlich. Aus dieser Figur ersieht man auch, dass die Bodenhaftung besonders gut wird, wenn die in dieser Figur vertikal Ausdehnung des Verschleissgliedes 2 gleich oder grösser wie diejenige der ihm benachbarten Endglieder 6 ist.

Die Fig. 2 zeigt auch, wie die längliche Form des Gliedes 2 und seine zweifache Halterung ein Rollen am Boden verhindern, im Gegensatz zu üblichen, das Verbindungsstück nur einfach umfassenden Abnützungsringen.

Zu Fig. 1 zurückkehrend ist zu bemerken, dass das als Verschleissstück wirkende Glied 2 eine an sich zwischen den Abschnitten 4a und 4b bestehende Lücke füllt, und auch dadurch eine verbesserte Bodenhaftung gewährleistet. Durch das Schliessen dieser Lücke wird ausserdem ein drittes, geschlossenes Auge 9 gebildet, was die Stabilität des Ganzen erhöht, und vor allem verhindert, dass bei Nichtgebrauch der Gleitschutzkette die Endglieder der Abschnitte 4a, 4b bis an das jeweilige Ende 11a, 11b des Verbindungsstückes in dieses Auge 9 hineinrutschen, was zu unerwünschter Knotenbildung führen kann.

Der in Fig. 1 obenliegende Scheitelteil 12 des herzförmig gebogenen Verbindungsstückes 1 ist verhältnismässig flach und die daran anschliessenden Schenkel bilden einen stumpfen Winkel. Dadurch wirkt das Verbindungsstück bei ungleichem Zug an den unteren Kettenabschnitten 4a, 4b nicht nur als eine kräfteausgleichenden Waage, sondern gestattet auch eine gewisse rechts-links-Verschiebung von Verbindungsstück und unteren Kettenabschnitten, gegenüber dem oberen Kettenabschnitt 3. Dadurch wird ein gleichmässiges Anliegen der gesamten Laufkette an den Reifen auch bei nicht vollkommen gleichmässiger Montage möglich.

Bei gewissen Geometrien von Gleichschutzketten treten Knotenpunkte auf, in denen nicht drei, sonder vier Kettenabschnitte zusammenlaufen. Eine entsprechende Ausführungsform der Verzweigungsstelle ist in Fig. 4 rein schematisch dargestellt. Diese Figur entspricht in stilisierter Form der Fig.1, und Teile mit entsprechender Funktion tragen dieselben Kennzahlen. Es sind vier, in einer Verzweigungsstelle zusammenkommende Kettenabschnitte 5,6 angedeutet, welche durch ein Verbindungsstück 1 zusammengehalten werden. Das das Verbindungsstück schliessende

Verschleissstück ist mit 2 bezeichnet. Zwei weitere mögliche Varianten ergeben sich z.B., wenn man die rechte, beziehungsweise linke Hälfte der Fig. 4 an der Achse A spiegelt; es sind aber andere Formgebungen, etwa mit aussenliegendem Auge 8, ohne weiteres denkbar, wie etwa in Fig. 5 für einen dreiteiligen Knotenpunkt skizziert.

Patentansprüche
---------------------------

1. Reifen-Gleitschutzkette mit einem Verzweigungen aufweisenden Laufteil, dadurch gekennzeichnet, dass die an mindestens einer Verzweigung zusammenlaufenden Kettenabschnitte durch ein mindestens zweistückiges Verzweigungsglied zusammengehalten werden, dessen einer Teil ein Verbindungsstück ist, welches aus einem langgestreckten, zur Bildung von mindestens zwei Augen, in denen Endglieder der Kettenabschnitte gefangen sind, gebogenen Element besteht, während ein zweiter Teil des Verzweigungsgliedes ein von dem länglichen Element mindestens zweimal durchdrungenes und in mindestens einem Auge des Verbindungsstückes, allein oder zusammen mit einem Kettenglied, gefangenes Verschleissstück ist.

2. Reifen-Gleitschutzkette nach Anspruch 1, dadurch gekennzeichnet, dass mindestens ein Auge durch ein ¯üglich des Verbindungsstückes einwärts gebogenes Ende langgestreckten Elementes gebildet wird.

3. Reifen-Gleitschutzkette nach einem der Ansprüche 1 oder 2, dadurch gekennzeichnet, dass das langgestreckte Element in einer Ebene gebogen ist und vom Verschleissstück zu einem geschlossenen Gebilde ergänzt wird.

4. Reifen-Gleitschutzkette nach Anspruch 3, dadurch gekennzeichnet, dass das langgestreckte Element zu einem Herz mit knickfreiem Scheitel gebogen ist und an seinen, vom Scheitel abgewandten, freien Enden zu je einem Auge einwärts gerollt ist, wobei in jedem Auge ein Endglied, das Verschleissstück aber in beiden gefangen ist.

5. Reifen-Gleitschutzkette nach Anspruch 4, dadurch gekennzeichnet, dass die geraden Teile beider Schenkel des Scheitels einen Winkel von mindestens 90° einschliessen.

6. Reifen-Gleitschutzkette nach einem der vorangehenden Ansprüche, dadurch gekennzeichnet, dass das Ver-

0084354

schleissstück gleichartig ist, wie die Glieder mindestens einer der Kettenabschnitte.

7. Reifen-Gleitschutzkette nach einem der Ansprüche 2 bis 6, dadurch gekennzeichnet, dass das Verschleissstück in der zur Ebene des Verbindungsstückes senkrechten Richtung eine grössere Ausdehnung hat, als die ihm beidseits benachbarten Endglieder.

8. Reifen-Gleitschutzkette nach einem der Ansprüche 1 bis 3, dadurch gekennzeichnet, dass in mindestens einer Verzweigung mehr als drei Kettenabschnitte zusammenlaufen und durch das Verbindungsstück zusammengehalten werden.

9. Reifen-Gleitschutzkette nach einem der vorangehenden Ansprüche, dadurch gekennzeichnet, dass das Verbindungsstück aus Klaviersaitenstahl besteht.

10. Verfahren zur Herstellung einer Reifen-Gleitschutzkette nach Anspruch 1, dadurch gekennzeichnet, dass zur Bildung von Verzweigungen je mindestens drei Kettenabschnitte und ein Verschleissglied in ein vorgebogenes längliches Element eingehängt und danach durch Zubiegen desselben darin gefangen werden.

0084354

# Fig.1

3

5

12

11a    11b

8    9    8

2

II    II

6    6

4a    4b

# Fig.2

2

1    1

1    1

*Fig. 3*

*Fig. 4*

*Fig. 5*